# EUROPÄISCHE PATENTSCHRIFT

(11) **EP 3 269 184 B1**
(45) Veröffentlichungstag und Bekanntmachung des Hinweises auf die Patenterteilung: **24.04.2019**
(21) Anmeldenummer: 16700594.1
(22) Anmeldetag: 14.01.2016
(51) Int. Cl.: H04W 52/24, H04W 52/36

(54) **VORRICHTUNG UND VERFAHREN ZUR LEISTUNGSANPASSUNG EINES WLAN-NETZWERKES**
DEVICE AND METHOD FOR THE POWER ADJUSTMENT OF A WLAN NETWORK
DISPOSITIF ET PROCÉDÉ D'ADAPTATION DE PUISSANCE D'UN RÉSEAU WLAN

(30) Priorität: 10.03.2015 DE 102015204246
(43) Veröffentlichungstag der Anmeldung: 17.01.2018
(73) Patentinhaber: Volkswagen Aktiengesellschaft, 38440 Wolfsburg (DE)
(72) Erfinder: FONTANA, Dino, 45968 Gladbeck (DE); JURTHE, Sascha, 45529 Hattingen (DE)
(86) Internationale Anmeldenummer: PCT/EP2016/050615
(87) Internationale Veröffentlichungsnummer: WO 2016/142081

(56) Entgegenhaltungen:
- EP-A2- 1 835 636
- US-A1- 2013 310 058
- US-B1- 7 251 457

## Beschreibung

Die Erfindung betrifft eine Vorrichtung und ein Verfahren zur Leistungsanpassung eines WLAN-Netzwerkes in einem begrenzten Raum.

Unter einem WLAN-Netzwerk wird ein lokales Funknetz verstanden, die beispielsweise in der Standard IEEE 802.11-Familie normiert sind. Dabei wird häufig zwischen einem Infrastruktur-Modus und einem Ad-hoc-Modus unterschieden, wobei bei einem Infrastruktur-Modus ein WLAN-Modul einen WLAN-Access Point für das Netzwerk bildet und alle anderen WLAN-Module im Netzwerk als Clients koordiniert. Bei Ad-hoc-Netzen gibt es hingegen keine zentrale Instanz und die Endgeräte übernehmen die Koordination, wobei Ad-hoc-Netze hinsichtlich der Reichweite und der Anzahl der WLAN-Module beschränkt sind.

Es ist bekannt, dass eine zu hohe Sendeleistung zwischen zwei WLAN-Modulen zu Störungen bei benachbarten Modulen in anderen Netzwerken führen kann. Auch energetisch ist eine zu hohe Sendeleistung nachteilig.

Aus der DE 11 2010 001 335 T5 ist ein Sendeleistungs-Steuerverfahren zum Steuern der Sendeleistung bekannt, mit der Informationen in der drahtlosen Kommunikation zwischen wenigstens zwei beweglichen Endgerätvorrichtungen von einer Endgerätvorrichtung an eine andere Endgerätevorrichtung gesendet werden. Dabei wird die Sendeleistung auf einen Wert Ptx ≥ Poffset - Prx eingestellt, wobei Prx ein Messwert der Empfangsleistung bei der einen Endgerätevorrichtung ist, der ein vorgegebenes drahtloses Signal betrifft, das mit bekannter elektrischer Leistung von einer der anderen Endgerätvorrichtungen gesendet wird. Poffset ist ein Wert einer maximalen Sendeleistung, der im Voraus eingestellt wird und für die drahtlose Kommunikation zwischen den Endgerätvorrichtungen in einem vorgegebenen Kommunikationsbereich verwendet wird. Damit kann die Sendeleistung zwischen den zwei WLAN-Modulen angepasst werden, was Energie spart und Störungen minimiert. Ein Anwendungsgebiet des Verfahrens ist ein Car2X-WLAN-Netzwerk.

Neben derartigen Anwendungen ist es auch bekannt, WLAN-Netzwerke in begrenzten Räumen anzuwenden, bei denen die Bewegung zwischen den WLAN-Modulen vernachlässigbar ist im Vergleich zu zwei sich relativ bewegenden Kraftfahrzeugen. Bei derartigen WLAN-Netzwerken in begrenzten Räumen ist daher eine Leistungsanpassung der Sendeleistung nicht üblich.

EP1835636A2 offenbart Geräte und Verfahren zur Messung von drahtloser Kommunikation, wobei Downlink-Parameter auf der Basis gemeldeter Messergebnisse angepasst werden.

US2013/0310058A1 offenbart Systeme und Verfahren zur Verringerung von Interferenz in heterogenen Netzen. Dabei wird u.a. die Sendeleistung angepasst.

Der Erfindung liegt das technische Problem zugrunde, ein WLAN-Netzwerk in geschlossenen Räumen zu verbessern sowie ein Verfahren zum verbesserten Betreiben eines WLAN-Netzwerkes in geschlossenen Räumen zur Verfügung zu stellen.

Die Lösung des technischen Problems ergibt sich durch eine Vorrichtung mit den Merkmalen des Anspruchs 1 sowie ein Verfahren mit den Merkmalen des Anspruchs 7. Weitere vorteilhafte Ausgestaltungen der Erfindung ergeben sich aus den Unteransprüchen.

Hierzu umfasst die Vorrichtung zur Leistungsanpassung eines WLAN-Netzwerkes in einem begrenzten Raum ein erstes WLAN-Modul im Raum, das zur Kommunikation mit mindestens einem zweiten im Raum befindlichen WLAN-Modul dient. Weiter umfasst die Vorrichtung mindestens ein Referenz-WLAN-Modul. Das Referenz-WLAN-Modul ist derart ausgebildet, dass WLAN-Signale vom ersten WLAN-Modul empfangen werden und eine Signalstärke ermittelt wird. Signalstärke ist hier synonym mit Empfangsleistung zu verstehen. Diese ermittelte Signalstärke wird an das erste WLAN-Modul übertragen. Das erste WLAN-Modul ist derart ausgebildet, dass in Abhängigkeit der übertragenen Signalstärke von dem Referenz-WLAN-Modul die Sendeleistung des ersten WLAN-Moduls derart angepasst wird, dass die empfangene Signalstärke an dem Referenz-WLAN-Modul kleiner als ein vorgegebener Schwellwert ist. Vorzugsweise existiert ein oberer und ein unterer Schwelwert, wobei der obere Schwellwert unterschritten und der untere Schwellwert überschritten werden soll. Der vorgegebene untere Schwellwert am Referenz-WLAN-Modul ist derart gewählt, dass die zweiten WLAN-Module eine ausreichende Empfangsleistung von Signalen des ersten WLAN-Moduls haben. Hierzu ist das Referenz-WLAN-Modul beispielsweise an einem Ort positioniert, wo der Empfang schlechter ist als an allen denkbaren Positionen der zweiten WLAN-Module. Alternativ wird dies durch die Höhe des Schwellwertes ausgeglichen. Das Referenz-WLAN-Modul kann prinzipiell Bestandteil des Netzwerks sein, wobei es jedoch vorzugsweise ein reines Referenz-Modul ist und nicht an der aktiven Kommunikation teilnimmt. Das erste WLAN-Modul kann dabei ein WLAN-Access Point sein, das WLAN-Netzwerk kann aber auch als Ad-hoc-Netz ausgebildet sein, sodass das erste WLAN-Modul nur ein ausgewähltes WLAN-Modul ist.

In einer Ausführungsform ist der Raum ein Kraftfahrzeug. Insbesondre die energetische Einsparung ist dabei in Kraftfahrzeugen sehr vorteilhaft. Aber auch die Unterdrückung von Störsignalen nach außen (z.B. zu anderen Kraftfahrzeugen) ist vorteilhaft. Ein weiterer Vorteil ist, dass das WLAN-Netzwerk schwerer von außen abgehört und somit manipuliert werden kann.

In einer weiteren Ausführungsform ist das erste WLAN-Modul einem Infotainment-System des Fahrzeugs zugeordnet oder Bestandteil eines Infotainment-Systems. Hierüber können alle Fahrzeuginsassen auf die Daten mit ihren WLAN-Modulen bzw. Endgeräten zugreifen bzw. Eingaben vornehmen.

Prinzipiell kann das Referenz-WLAN-Modul im Fahrzeug (also im Raum) angeordnet sein, beispielsweise im Bereich der Heckablage oder an der Heckscheibe. Ist dann das erste WLAN-Modul beispielsweise im Handschuhfach angeordnet, so müssen die Sendesignale vom ersten WLAN-Modul zum Referenz-WLAN-Modul durch das gesamte Fahrzeug, sodass alle dazwischen liegenden zweiten WLAN-Module einen besseren Empfang aufweisen. Die empfangene Signalstärke am Referenz-WLAN-Modul ist dabei abhängig von der Anzahl und der Verteilung von Personen im Kraftfahrzeug, sodass die Anpassung der Sendeleistung situativ angepasst ist. Auch die Art des Fahrzeugs (Ausstattung, Länge) beeinflusst die Signalstärke und wird so berücksichtigt.

In einer weiteren bevorzugten Ausführungsform ist mindestens die Antenne des Referenz-WLAN-Moduls an der Außenseite des Fahrzeugs angeordnet. Der Vorteil ist, dass in dieser Position einerseits der Empfang mit großer Sicherheit schlechter als im Innern des Kraftfahrzeugs ist und zweitens die Signalstärke außerhalb des Kraftfahrzeugs eingestellt wird, die zu Störungen führen kann.

Das Referenz-WLAN-Modul kann prinzipiell ein spezielles Referenz-WLAN-Modul für das verwendete WLAN-Netzwerk im Kraftfahrzeug sein. Vorzugsweise ist das Referenz-WLAN-Modul jedoch ein Car2X-WLAN-Modul, sodass dieses eine Doppelfunktion besitzt. Dabei wird ausgenutzt, dass die nach IEEE 802.11p für Car2X eingesetzten WLAN-Module den Frequenzbereich um 5,9 GHz nutzen, deren Antennen in der Regel aber auch in der Lage sind, 5 GHz (5.160 - 5.830 MHz) und 2,4 GHz (2.400 - 2.490 MHz) zu empfangen.

In einer weiteren Ausführungsform sind das Referenz-WLAN-Modul und das erste WLAN-Modul über ein Bussystem miteinander verbunden, sodass das erste WLAN-Modul nicht im Frequenzbereich des Referenz-WLAN-Moduls empfangen muss. Das Bussystem kann beispielsweise ein CAN- oder Automotive Ethernet-Bussystem sein.

In einer weiteren Ausführungsform erfolgt die Anpassung der Sendeleistung kontinuierlich oder periodisch (z.B. alle 10 Sekunden). Alternativ oder kumulativ kann die Anpassung ereignisgesteuert erfolgen, beispielsweise beim Starten des Kraftfahrzeugs oder wenn ein Türöffnen und -schließen erfasst wird, da dann Fahrzeuginsassen ein- oder ausgestiegen sein können.

In einer weiteren Ausführungsform ist die Vorrichtung derart ausgebildet, dass das erste WLAN-Modul und/oder das Referenz-WLAN-Modul WLAN-Signale des mindestens einen zweiten WLAN-Moduls empfangen kann und eine Signalstärke ermittelt wird, wobei dem zweiten WLAN-Modul in Abhängigkeit des übermittelten Signals seine Sendeleistung derart anpasst, dass die empfangene Sendestärke am ersten WLAN-Modul und/oder am Referenz-WLAN-Modul kleiner als ein vorgegebener Schwellwert ist. Dabei ist anzumerken, dass, wenn an beiden Modulen die empfangene Signalstärke ausgewertete wird, die Schwellwerte für die beiden Module unterschiedlich sein können.

Hinsichtlich der verfahrensmäßigen Ausgestaltung kann vollinhaltlich auf die vorangegangenen Ausführungen Bezug genommen werden.

Die Erfindung wird nachfolgend anhand eines bevorzugten Ausführungsbeispiels näher erläutert. Die einzige Figur zeigt ein schematisches Blockschaltbild einer Vorrichtung zur Leistungsanpassung eines WLAN-Netzwerkes in einem Kraftfahrzeug.

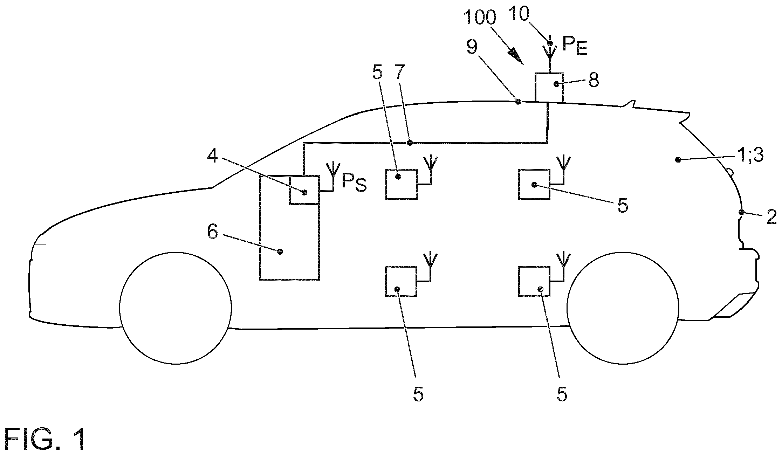

In der Fig. 1 ist schematisch ein Kraftfahrzeug 1 dargestellt, dessen Karosserie 2 einen Raum 3 umschließt. Im Raum 3 ist ein WLAN-Netzwerk angeordnet, das mindestens ein erstes WLAN-Modul 4 und mehrere zweite WLAN-Module 5 aufweist, wobei in der Fig. 1 beispielhaft vier zweite WLAN-Module 5 dargestellt sind. Das erste WLAN-Modul 4 ist Bestandteil eines Infotainment-Systems 6 des Kraftfahrzeugs 1. Das erste WLAN-Modul 4 kann dabei fest im Kraftfahrzeug 1 angeordnet sein. Die zweiten WLAN-Module 5 können sowohl fest im Kraftfahrzeug 1 angeordnet bzw. verbaut sein als auch mobilen Endgeräten zugeordnet sein. Das erste WLAN-Modul 4 ist derart ausgebildet, dass eine Sendeleistung P_{S} des ersten WLAN-Moduls 4 veränderbar ist. Das erste WLAN-Modul 4 ist über mindestens eine Busleitung 7 mit einem Referenz-WLAN-Modul 8 verbunden, das auf einem Dach 9 des Kraftfahrzeugs 1 angeordnet ist, sodass eine Antenne 10 des Referenz-WLAN-Moduls 8 außerhalb des Raumes 3 ist. Das Referenz-WLAN-Modul 8 ist ein WLAN-Modul eines Car2X-Netzwerkes und auf eine andere Frequenz abgestimmt als das WLAN-Netzwerk im Raum 3. Das erste WLAN-Modul 4 und das Referenz-WLAN-Modul 8 bilden eine Vorrichtung 100 zur Leistungsanpassung einer Sendeleistung P_{S} des ersten WLAN-Moduls 4, wobei die Antenne 10 des WLAN-Referenz-Moduls 8 in der Lage ist, Signale im Frequenzband des WLAN-Netzwerkes zu empfangen.

Die Funktionsweise der Vorrichtung 100 ist dabei beispielsweise wie folgt: Zunächst sendet das erste WLAN-Modul 4 mit einer maximalen Sendeleistung P_{S,max} oder einer vorab festgelegten Sendeleistung P_{S}, die unterhalb der maximalen Sendeleistung P_{S,max} ist, aber dennoch relativ hoch ist. Die Sendeleistung P_{S} des ersten WLAN-Moduls 4 ist dabei ausreichend groß, sodass alle zweiten WLAN-Module 5 einen sicheren Empfang haben. Das Referenz-WLAN-Modul 8 empfängt nun aufgrund der Sendeleistung P_{S} des ersten WLAN-Moduls 4 ein Signal mit einer Signalstärke P_{E}. Durch vorab durchgeführte Messungen kann ein unterer Grenzwert P_{E,unten} bestimmt werden. Dieser Wert P_{E,unten} ist derart gewählt, dass bei diesem Wert unabhängig von der Anzahl und Position von Fahrzeuginsassen im Kraftfahrzeug 1 alle zweiten WLAN-Module 5 einen sicheren Empfang haben. Des Weiteren wird ein oberer Grenzwert P_{E,oben} als Schwellwert festgelegt. Dabei gilt P_{E,oben} > P_{E,unten}. Die Differenz P_{E,oben} - P_{E,unten} ist dabei möglichst gering, wobei jedoch die Verstellbarkeit der Sendeleistung P_{S} berücksichtigt werden muss. Empfängt dann das Referenz-WLAN-Modul 8 eine Empfangsleistung bzw. Signalstärke P_{E} > P_{E,oben}, so wird dieser Wert über die Busleitung 7 an das erste WLAN-Modul 4 zurückübertragen. Das erste WLAN-Modul 4 reduziert dann seine Sendeleistung P_{S} solange, bis die Signalstärke P_{E} am Referenz-WLAN-Modul 8 kleiner als P_{E,oben} und größer/gleich P_{E,unten} ist.

Ist diese Bedingung erfüllt, so ist bei reduzierter Sendeleistung P_{S} gewährleistet, dass alle zweiten WLAN-Module 5 einen sicheren Empfang haben und die aus dem Raum 3 abgestrahlte Störstrahlung kleiner als P_{E,oben} ist, sodass benachbarte Kraftfahrzeuge oder andere WLAN-Endgeräte nur minimal gestört werden. Des Weiteren wird dadurch auch ein Abhören des WLAN-Netzwerkes von außerhalb erschwert.

Analog kann das Verfahren auch derart durchgeführt werden, dass von einer minimalen Sendeleistung P_{S} startend diese solange erhöht wird, bis P_{E,unten} überschritten und P_{E,oben} unterschritten wird.

## Patentansprüche

1. Vorrichtung (100) zur Leistungsanpassung eines WLAN-Netzwerkes in einem begrenzten Raum (3), wobei der Raum (3) ein Kraftfahrzeug (1) ist, umfassend ein erstes WLAN-Modul im Raum (3), das zur Kommunikation mit mindestens einem zweiten im Raum (3) befindlichen WLAN-Modul (5) dient, und mindestens ein Referenz-WLAN-Modul (8), wobei das Referenz-WLAN-Modul (8) derart ausgebildet ist, dass WLAN-Signale vom ersten WLAN-Modul (4) empfangen werden und eine Signalstärke (P_{E}) ermittelt wird und an das erste WLAN-Modul (4) übertragen wird, wobei das erste WLAN-Modul (4) derart ausgebildet ist, dass in Abhängigkeit der von dem Referenz-WLAN-Modul (8) übertragenen Signalstärke (P_{E}) die Sendeleistung (P_{S}) des ersten WLAN-Moduls (4) derart angepasst wird, dass die empfangene Signalstärke (P_{E}) an dem Referenz-WLAN-Modul (8) kleiner als ein vorgegebener oberer Schwellwert (P_{E,oben}) und größer als ein unterer Schwellwert (P_{E,unten}) ist, wobei mindestens eine Antenne (10) des Referenz-WLAN-Moduls (8) an der Außenseite des Kraftfahrzeugs (1) angeordnet ist.

2. Vorrichtung nach Anspruch 1, **dadurch gekennzeichnet, dass** das erste WLAN-Modul (4) einem Infotainment-System (6) des Kraftfahrzeugs (1) zugeordnet ist oder Bestandteil eines Infotainment-Systems (6) des Kraftfahrzeugs (1) ist.

3. Vorrichtung nach Anspruch 1 oder 2, **dadurch gekennzeichnet, dass** das Referenz-WLAN-Modul (8) als Car2x-WLAN-Modul ausgebildet ist.

4. Vorrichtung nach einem der vorangegangenen Ansprüche, **dadurch gekennzeichnet, dass** das Referenz-WLAN-Modul (8) und das erste WLAN-Modul (4) über ein Bussystem miteinander verbunden sind.

5. Vorrichtung nach einem der vorangegangenen Ansprüche, **dadurch gekennzeichnet, dass** die Vorrichtung (100) derart ausgebildet ist, dass die Anpassung der Sendeleistung (P_{S}) kontinuierlich, periodisch und/oder ereignisgesteuert erfolgt.

6. Vorrichtung nach einem der vorangegangenen Ansprüche, **dadurch gekennzeichnet, dass** die Vorrichtung (100) derart ausgebildet ist, dass das erste WLAN-Modul (4) und/oder das Referenz-WLAN-Modul (8) WLAN-Signale des mindestens einen zweiten WLAN-Moduls (5) empfangen und eine Signalstärke ermittelt wird, wobei dem zweiten WLAN-Modul (5) in Abhängigkeit der ermittelten Signalstärke ein Signal übermittelt wird, wobei das zweite WLAN-Modul (5) in Abhängigkeit des übermittelten Signals sein Sendeleistung derart anpasst, dass die empfangene Sendestärke am ersten WLAN-Modul (4) und/oder am Referenz-WLAN-Modul (8) kleiner als ein vorgegebener Schwellwert ist.

7. Verfahren zur Leistungsanpassung eines WLAN-Netzwerkes in einem begrenzten Raum (3), wobei der Raum (3) ein Kraftfahrzeug (1) ist, mittels eines ersten WLAN-Moduls (4) im Raum (3), das zur Kommunikation mit mindestens einem zweiten im Raum (3) befindlichen WLAN-Modul (5) dient, und mindestens ein Referenz-WLAN-Modul (8), wobei das Referenz-WLAN-Modul (8) Signale vom ersten WLAN-Modul (4) empfängt und eine Signalstärke (P_{E}) ermittelt, wobei das erste WLAN-Modul (4) in Abhängigkeit der ermittelten Signalstärke seine Sendeleistung (P_{S}) anpasst, sodass die empfangene Signalstärke (P_{E}) an dem Referenz-WLAN-Modul (8) kleiner als ein vorgegebener oberer Schwellwert (P_{E,oben}) ist und größer als ein unterer Schwellwert (P_{E,unten}) ist, wobei mindestens eine Antenne (10) des Referenz-WLAN-Moduls (8) an der Außenseite des Kraftfahrzeugs (1) angeordnet ist.

8. Verfahren nach Anspruch 7, **dadurch gekennzeichnet, dass** die Anpassung der Sendeleistung (P_{S}) kontinuierlich, periodisch und/oder ereignisgesteuert erfolgt.

9. Verfahren nach Anspruch 7 oder 8, **dadurch gekennzeichnet, dass** das erste WLAN-Modul (4) und/oder das Referenz-WLAN-Modul (8) WLAN-Signale des mindestens einen zweiten WLAN-Moduls (5) empfangen und eine Signalstärke ermittelt wird, wobei dem zweiten WLAN-Modul (5) in Abhängigkeit der ermittelten Signalstärke ein Signal übermittelt wird, wobei das zweite WLAN-Modul (5) in Abhängigkeit des übermittelten Signals seine Sendeleistung derart anpasst dass die empfangene Sendestärke am ersten WLAN-Modul (4) und/oder am Referenz-WLAN-Modul (8) kleiner als ein vorgegebener Schwellwert ist.

## Claims

1. Device (100) for adjusting the power of a WLAN network in a limited space (3), the space (3) being a motor vehicle (1), comprising a first WLAN module in the space (3), which module is used to communicate with at least one second WLAN module (5) in the space (3), and at least one reference WLAN module (8), the reference WLAN module (8) being designed in such a manner that WLAN signals from the first WLAN module (4) are received and a signal strength (P_{E}) is determined and is transmitted to the first WLAN module (4), the first WLAN module (4) being designed in such a manner that the transmission power (P_{S}) of the first WLAN module (4) is adjusted on the basis of the signal strength (P_{E}) transmitted from the reference WLAN module (8) in such a manner that the received signal strength (P_{E}) at the reference WLAN module (8) is less than a predefined upper and greater threshold value (P_{E, oben}) than a lower threshold value (P_{E, untan}), at least one antenna (10) of the reference WLAN module (8) being arranged on the outside of the motor vehicle (1).

2. Device according to Claim 1, **characterized in that** the first WLAN module (4) is assigned to an infotainment system (6) of the motor vehicle (1) or is part of an infotainment system (6) of the motor vehicle (1).

3. Device according to Claim 1 or 2, **characterized in that** the reference WLAN module (8) is in the form of a car2X WLAN module.

4. Device according to one of the preceding claims, **characterized in that** the reference WLAN module (8) and the first WLAN module (4) are connected to one another via a bus system.

5. Device according to one of the preceding claims, **characterized in that** the device (100) is designed in such a manner that the transmission power (P_{S}) is adjusted continuously, periodically and/or in an event-controlled manner.

6. Device according to one of the preceding claims, **characterized in that** the device (100) is designed in such a manner that the first WLAN module (4) and/or the reference WLAN module (8) receive(s) WLAN signals from the at least one second WLAN module (5) and a signal strength is determined, a signal being transmitted to the second WLAN module (5) on the basis of the determined signal strength, the second WLAN module (5) adjusting its transmission power on the basis of the transmitted signal in such a manner that the received transmission strength at the first WLAN module (4) and/or at the reference WLAN module (8) is less than a predefined threshold value.

7. Method for adjusting the power of a WLAN network in a limited space (3), the space (3) being a motor vehicle (1), by means of a first WLAN module (4) in the space (3), which module is used to communicate with at least one second WLAN module (5) in the space (3), and at least one reference WLAN module (8), the reference WLAN module (8) receiving signals from the first WLAN module (4) and determining a signal strength (P_{E}), the first WLAN module (4) adjusting its transmission power (P_{S}) on the basis of the determined signal strength, such that the received signal strength (P_{E}) at the reference WLAN module (8) is less than a predefined upper and greater threshold value (P_{E,oben}) than a lower threshold value (P_{E}, untan), at least one antenna (10) of the reference WLAN module (8) being arranged on the outside of the motor vehicle (1).

8. Method according to Claim 7, **characterized in that** the transmission power (P_{S}) is adjusted continuously, periodically and/or in an event-controlled manner.

9. Method according to Claim 7 or 8, **characterized in that** the first WLAN module (4) and/or the reference WLAN module (8) receive(s) WLAN signals from the at least one second WLAN module (5) and a signal strength is determined, a signal being transmitted to the second WLAN module (5) on the basis of the determined signal strength, the second WLAN module (5) adjusting its transmission power on the basis of the transmitted signal in such a manner that the received transmission strength at the first WLAN module (4) and/or at the reference WLAN module (8) is less than a predefined threshold value.

## Revendications

1. Dispositif (100) d'adaptation de la puissance d'un réseau WLAN dans un espace (3) limité, l'espace (3) étant un véhicule automobile (1), comprenant un premier module WLAN dans l'espace (3), lequel sert à la communication avec au moins un deuxième module WLAN (5) qui se trouve dans l'espace (3), et au moins un module WLAN de référence (8), le module WLAN de référence (8) étant configuré de telle sorte que les signaux WLAN en provenance du premier module WLAN (4) sont reçus et une intensité de signal (P_{E}) est déterminée puis transmise au premier module WLAN (4), le premier module WLAN (4) étant configuré de telle sorte que la puissance d'émission (P_{S}) du premier module WLAN (4) est adaptée en fonction de l'intensité de signal (P_{E}) transmise par le module WLAN de référence (8) de telle sorte que l'intensité de signal (P_{E}) reçue au niveau du module WLAN de référence (8) est inférieure à une valeur de seuil haute (P_{E, oben}) prédéfinie et supérieure à une valeur de seuil basse (P_{E, unten}), au moins une antenne (10) du module WLAN de référence (8) étant disposée sur le côté extérieur du véhicule automobile (1).

2. Dispositif selon la revendication 1, **caractérisé en ce que** le premier module WLAN (4) est associé à un système d'infodivertissement (6) du véhicule automobile (1) et est un élément constitutif d'un système d'infodivertissement (6) du véhicule automobile (1).

3. Dispositif selon la revendication 1 ou 2, **caractérisé en ce que** le module WLAN de référence (8) est réalisé sous la forme d'un module WLAN Car2x.

4. Dispositif selon l'une des revendications précédentes, **caractérisé en ce que** le module WLAN de référence (8) et le premier module WLAN (4) sont reliés ensemble par le biais d'un système de bus.

5. Dispositif selon l'une des revendications précédentes, **caractérisé en ce que** le dispositif (100) est configuré de telle sorte que l'adaptation de la puissance d'émission (P_{S}) est effectuée continuellement, périodiquement et/ou en étant commandée par un événement.

6. Dispositif selon l'une des revendications précédentes, **caractérisé en ce que** le dispositif (100) est configuré de telle sorte que le premier module WLAN (4) et/ou le module WLAN de référence (8) reçoivent des signaux WLAN de l'au moins un deuxième module WLAN (5) et une intensité de signal est déterminée, un signal étant communiqué au deuxième module WLAN (5) en fonction de l'intensité de signal déterminée, le deuxième module WLAN (5) adaptant sa puissance d'émission en fonction du signal communiqué de telle sorte que l'intensité d'émission reçue au niveau du premier module WLAN (4) et/ou du module WLAN de référence (8) est inférieure à une valeur de seuil prédéfinie.

7. Procédé d'adaptation de la puissance d'un réseau WLAN dans un espace (3) limité, l'espace (3) étant un véhicule automobile (1), au moyen d'un premier module WLAN (4) dans l'espace (3), lequel sert à la communication avec au moins un deuxième module WLAN (5) qui se trouve dans l'espace (3), et d'au moins un module WLAN de référence (8), le module WLAN de référence (8) recevant des signaux WLAN du premier module WLAN (4) et déterminant une intensité de signal (P_{E}), le premier module WLAN (4) adaptant sa puissance d'émission (P_{S}) en fonction de l'intensité de signal déterminée, de telle sorte que l'intensité de signal (P_{E}) reçue au niveau du module WLAN de référence (8) est inférieure à une valeur de seuil haute (P_{E, oben}) prédéfinie et supérieure à une valeur de seuil basse (P_{E, unten}), au moins une antenne (10) du module WLAN de référence (8) étant disposée sur le côté extérieur du véhicule automobile (1).

8. Procédé selon la revendication 7, **caractérisé en ce que** l'adaptation de la puissance d'émission (P_{S}) est effectuée continuellement, périodiquement et/ou en étant commandée par un événement.

9. Procédé selon la revendication 7, **caractérisé en ce que** le premier module WLAN (4) et/ou le module WLAN de référence (8) reçoivent des signaux WLAN de l'au moins un deuxième module WLAN (5) et une intensité de signal est déterminée, un signal étant communiqué au deuxième module WLAN (5) en fonction de l'intensité de signal déterminée, le deuxième module WLAN (5) adaptant sa puissance d'émission en fonction du signal communiqué de telle sorte que l'intensité d'émission reçue au niveau du premier module WLAN (4) et/ou du module WLAN de référence (8) est inférieure à une valeur de seuil prédéfinie.
